# FASCICULE DE BREVET EUROPEEN

(11) **EP 1 180 069 B1**
(45) Date de publication et mention de la délivrance du brevet: **09.07.2003**
(21) Numéro de dépôt: 00915280.2
(22) Date de dépôt: 04.04.2000
(51) Int. Cl.: B29C 49/42, B65G 47/90

(54) **FOUR DE CONDITIONNEMENT THERMIQUE POUR UNE INSTALLATION DE FABRICATION PAR SOUFFLAGE DE RECIPIENTS EN MATERIAU THERMOPLASTIQUE**
BLASFORMANLAGE ZUR HERSTELLUNG VON BEHÄLTERN MIT OFEN ZUR WÄRMEKONDITIONIERUNG
THERMAL PROCESSING OVEN IN A BLOW-FORMING FACILITY FOR THERMOPLASTIC RECEPTACLES

(30) Priorité: 26.04.1999 FR 9905336
(43) Date de publication de la demande: 20.02.2002
(73) Titulaire: SIDEL, 76053 Le Havre Cedex (FR)
(72) Inventeur: GUIFFANT, Alain SIDEL, F-76053 le Havre Cedex (FR); MOUCHELET, Marc SIDEL, F-76053 le Havre Cedex (FR)
(74) Mandataire: Siloret, Patrick
(86) Numéro de dépôt international: FR0000836
(87) Numéro de publication internationale: WO00064658

(56) Documents cités:
- WO-A-89/00140
- DE-C- 3 916 423
- FR-A- 2 502 128
- US-A- 4 086 999

## Description

L'invention se rapporte au domaine des procédés de fabrication de corps creux en matériau thermoplastique dans lesquels on fabrique d'abord une préforme par injection avant d'obtenir le récipient final au cours d'un procédé comportant au moins une étape de soufflage.

La préforme obtenue par injection présente généralement un corps cylindrique tubulaire qui est fermé à l'une de ses extrémités axiales et qui est prolongé à son autre extrémité par un col, lui aussi tubulaire. Le col est généralement injecté de manière à posséder déjà sa forme définitive tandis que le corps de la préforme est appelé à subir une déformation relativement importante pour former le récipient final suite à l'opération de soufflage.

Ces procédés concernent tout particulièrement la fabrication de récipients en polyéthylène téréphtalate (PET).

Il existe plusieurs variantes de procédés appartenant à cette famille. En fonction du procédé mis en oeuvre, l'installation de fabrication correspondante comprend un ou plusieurs fours de conditionnement thermique.

Dans tous les procédés concernés, l'opération de soufflage du corps de la préforme nécessite que celui-ci soit porté à une température supérieure à la température de transition vitreuse du matériau. A cet effet, on procède à un conditionnement thermique de la préforme en la faisant circuler à l'intérieur d'un four. Le four comporte des moyens de chauffage qui sont par exemple formés de lampes à infrarouge devant lesquelles la préforme est déplacée par un dispositif de transport. De manière avantageuse, il est prévu que la préforme soit mise en rotation sur elle-même lors de son parcours dans le four.

Les préformes sont généralement maintenues sur le dispositif de transport par un dispositif de préhension formé d'un mandrin qui est engagé à l'intérieur du col de la préforme et qui maintient cette dernière par serrage contre la face interne du co! Toutefois, dans certains cas, la prise de la préforme se fait par la face externe du col.

Dans certains de ces procédés, on cherche à augmenter la tenue en température du corps du récipient final en augmentant le taux de cristallinité du PET. Cela est obtenu en faisant d'abord subir à la préforme une première étape de soufflage pour obtenir un récipient intermédiaire qui est soumis à une étape de chauffage dans un four de traitement thermique, étape au cours de laquelle il se rétrécit. Ce récipient rétréci subit une seconde étape de soufflage qui lui donne la forme du récipient final.

Dans d'autre procédés, c'est le col de la préforme, du récipient final ou d'un récipient intermédiaire que l'on souhaite chauffer pour en augmenter la cristallinité. Pour cela, l'installation comporte un four de traitement thermique adapté.

Dans tous les cas, on voit donc que les installations de fabrication de récipients en matière thermoplastique peuvent comporter plusieurs type de four de traitement thermiques, ces fours étant bien entendu adaptés au traitement thermique à réaliser. Cependant, tous ces fours sont susceptibles de comporter le même type de système de convoyage.

Ces différents fours sont donc destinés à traiter des objets correspondant à différentes phases de la production du récipient final, Cependant, ils sont tous destinés à saisir cet objet par le col, lequel ne subit pas de variation fondamentale de sa géométrie, même si certains traitements conduisent à une modification de la structure de la matière constitutive du col. Aussi, dans la suite du texte on utilisera indifféremment le terme de préforme, d'ébauche ou de bouteille pour designer l'objet destiné à être traiter dans le four.

Selon une technique connue, le système de convoyage peut par exemple être constitué d'une chaîne de maillons de transports destinés à porter une préforme ou une ébauche du récipient en vue de la faire circuler le long d'un parcours à l'intérieur du four. Cette chaîne est animée d'un mouvement continu sur elle-même.

Pour saisir la préforme, un maillon de transport comporte un dispositif de préhension qui est mobile axialement par rapport au maillon et qui, lorsqu'il est amené d'une position extrême dégagée à une position extrême de préhension, s'engage axialement sur le col de l'ébauche.

On connaît différents moyens qui permettent de commander les déplacements des dispositifs de préhension entre leurs positions dégagée et de préhension. Ainsi, on utilise généralement un système à cames et à suiveurs de cames pour profiter du fait que, en général, le mouvement des dispositifs de préhension est perpendiculaire à celui de la chaîne de convoyage. De manière classique, chaque dispositif de préhension est équipé d'un galet qui est destiné à coopérer avec des rampes inclinées solidaires du châssis du four pour provoquer la montée ou la descente du dispositif de préhension au niveau des postes de chargement ou de déchargement des préformes.

Cependant, dans certains cas, les moyens de commande à cames ne donnent pas entière satisfaction. Cela est notamment le cas lorsque le dispositif de préhension comporte un mandrin qui est destiné à être reçu avec un serrage important à l'intérieur du col de la préforme.

Le chargement et le déchargement de la préforme nécessitent alors des efforts relativement importants appliqués selon l'axe du dispositif de préhension. Avec un système à cames, de tels efforts axiaux se traduisent par des efforts encore plus important exercés sur la chaîne de transport, dans la direction du mouvement de celle-ci. Ainsi, à chaque fois qu'un galet arrive au contact d'une came, la chaîne subit un à-coup qui est préjudiciable d'une part au bon synchronisme entre la chaîne et les autres éléments de l'installation de soufflage, et d'autre part à la durée de vie du système de convoyage. Cet à-coup sera d'autant plus important que l'on cherche à avoir un mouvement rapide du dispositif de préhension, car il faudra alors utiliser une came à forte inclinaison. De plus, dans ce cas, la pression de contact entre le galet et la came devient importante au point de menacer la longévité de ces deux éléments.

Par ailleurs, dans les réalisations connues, la galet est décalé par rapport à l'axe du mouvement du dispositif de préhension. Aussi, lorsque l'effort de chargement ou de déchargement est important, le galet induit sur le maillon correspondant de la chaîne une couple de rotation important, ce qui là encore peut être à l'origine d'une usure prématurée du système de convoyage.

L'invention a donc pour but de proposer de nouveaux moyens de commande des déplacements des dispositifs de préhension qui permettent de limiter les efforts subis par la chaîne de convoyage même lorsque l'effort de chargement ou de déchargement de la préforme est important.

Dans ce but, l'invention propose un four de conditionnement thermique pour une installation de fabrication par soufflage de récipients en matériau thermoplastique, du type comportant une chaîne de maillons de transport comportant des dispositifs de préhension dont chacun est destiné à porter une ébauche du récipient en vue de la faire circuler le long d'un parcours à l'intérieur du four, du type dans lequel la chaîne est animée d'un mouvement continu le long de son parcours, du type dans lequel chaque dispositif de préhension est mobile axialement par rapport au maillon qui le porte pour, lorsqu'il est amené d'une position extrême dégagée à une position extrême de préhension, s'engager axialement sur le col de l'ébauche, et du type dans lequel il est prévu des moyens de commande des déplacements des dispositifs de préhension entre leurs positions dégagée et de préhension, caractérisé en ce que les moyens de commande des déplacements des dispositifs de préhension comportent au moins un mécanisme pourvu d'un bras qui est mobile selon une trajectoire sensiblement parallèle à la direction axiale de préhension et qui porte un organe d'interface destiné à venir au contact du dispositif de préhension, et en ce que l'organe d'interface est monté mobile sur le bras de manière à permettre un contact sans glissement avec le dispositif de préhension tout en étant immobilisé par rapport au bras selon la direction axiale de préhension.

Selon d'autres caractéristiques de l'invention :
- le bras est commandé sur sa trajectoire selon un mouvement alternatif entre une position initiale et une position finale ; et, pour une position de contact du bras comprise entre ses positions initiale et finale, l'organe d'interface entre en contact avec le dispositif de préhension qui est dans l'une de ses positions extrêmes et le force vers l'autre de ses positions extrêmes, laquelle correspond à la position finale du bras ;
- l'organe d'interface est monté sur le bras de manière mobile selon une direction parallèle au mouvement des maillons de la chaîne ;
- l'organe d'interface est rappelé élastiquement vers une position de repos par rapport au bras, et, du fait du déplacement du chaînon correspondant entre le moment d'arrivée du bras en contact avec l'organe d'interface et le moment d'arrivée du bras à sa position finale, l'organe d'interface est écarté de sa position de repos par le dispositif de préhension au contact duquel il se trouve ;
- entre la position de contact et la position finale du bras, le dispositif de préhension coopère par adhérence avec l'organe d'interface pour l'écarter de sa position de repos par rapport au bras ;
- au cours du mouvement de retour du bras de sa position finale vers sa position initiale, l'organe d'interface est ramené vers sa position de repos par des moyens de rappel élastiques ;
- l'organe d'interface est monté à coulissement sur le bras selon la direction du mouvement des maillons de la chaîne ;
- l'organe d'interface est composé d'au moins un galet qui est monté à rotation sur le bras autour d'un axe perpendiculaire à la direction axiale de préhension et à la direction du mouvement des maillons de la chaîne ;
- entre le moment d'arrivée de l'organe d'interface en contact avec le dispositif de préhension et le moment d'arrivée du bras à sa position finale, le dispositif de préhension coopère par adhérence avec l'organe d'interface pour entraîner le galet en rotation autour de son axe ;
- le dispositif de préhension comporte une tige dont un tronçon central est guidé axialement dans le maillon correspondant et dont les deux extrémités opposées coopèrent respectivement avec l'ébauche et avec le mécanisme, le mécanisme exerce un effort de poussée sur la tige, et l'organe d'interface coopère en appui contre une surface de la tige qui est sensiblement plane et perpendiculaire à la direction axiale.
- le dispositif de préhension comporte une tige dont un tronçon central est guidé axialement dans le maillon correspondant et dont les deux extrémités opposées coopèrent respectivement avec l'ébauche et avec le mécanisme, le mécanisme exerce un effort de traction sur la tige, l'organe d'interface présente la forme d'un profilé en U présentant deux branches parallèles dont les extrémités sont rabattues vers l'intérieur pour délimiter une fente permettant le passage de la tige, la tige des dispositifs de préhension porte une tête de commande qui est destinée à circuler entre les deux branches du profilé et qui présente une largeur supérieure à la largeur de la fente de telle sorte que, lorsque l'organe d'interface est déplacé axialement par le bras, les extrémités rabattues du profilé coopèrent avec la tête pour commander le déplacement axial du dispositif de préhension ;
- le dispositif de préhension comporte une tige dont un tronçon central est guidé axialement dans le maillon correspondant et dont les deux extrémités opposées coopèrent respectivement avec l'ébauche et avec le mécanisme, le mécanisme exerce un effort de traction sur la tige ; le bras présente la forme d'un profilé en U présentant deux branches parallèles dont les extrémités sont rabattues vers l'intérieur pour délimiter une fente permettant le passage de la tige ; chacune des deux extrémités rabattues porte au moins galet ; la tige des dispositifs de préhension porte une tête de commande qui est destinée à circuler entre les deux branches du profilé et qui présente une largeur supérieure à la largeur de la fente de telle sorte que, lorsque le bras est déplacé axialement, les galets des extrémités rabattues du profilé coopèrent avec la tête pour commander le déplacement axial du dispositif de préhension ;
- le mouvement alternatif du bras est commandé par un système à bielle et à manivelle ; et
- les moyens de commande des déplacements des moyens de préhension comportent deux mécanismes dont l'un commande le déplacement des dispositifs de préhension de leur position extrême dégagée vers leur position extrême de préhension, et dont l'autre commande le déplacement inverse.

D'autres caractéristiques et avantages de l'invention apparaîtront à la lecture de la description détaillée qui suit ainsi que dans les dessins annexés dans lesquels :
- les figures 1 et 2 sont des vues en coupe axiale qui illustrent le dispositif de préhension d'un maillon de la chaîne de transport, ce dispositif étant illustré respectivement dans une position haute dégagée et dans une position basse de préhension d'une préforme ;
- la figure 3 est une vue en perspective illustrant un mode de réalisation d'un mécanisme de commande des déplacements du dispositif de préhension ;
- la figures 4 est une vue en coupe des moyens de commande illustrés à la figure 3, et sur laquelle on a illustré de plus l'outil adaptable sur ce mécanisme pour commander le déplacement du dispositif de préhension de sa position haute vers sa position basse, cet outil étant plus particulièrement illustré en perspective à la figure 5 ;
- la figure 6 illustre, en perspective, un outil adaptable sur le mécanisme de commande pour ramener le dispositif de préhension de sa position basse vers sa position haute :

- les figures 7A à 7D illustrent, de manière schématique en coupe axiale, une opération permettant la préhension de la préforme ;
- les figures 8A à 8D illustrent de la même manière une opération permettant la libération de la préforme ; et
- les figures 9 et 10 sont des vues similaires à celles de la figure 3 illustrant des variantes de réalisation de l'invention.

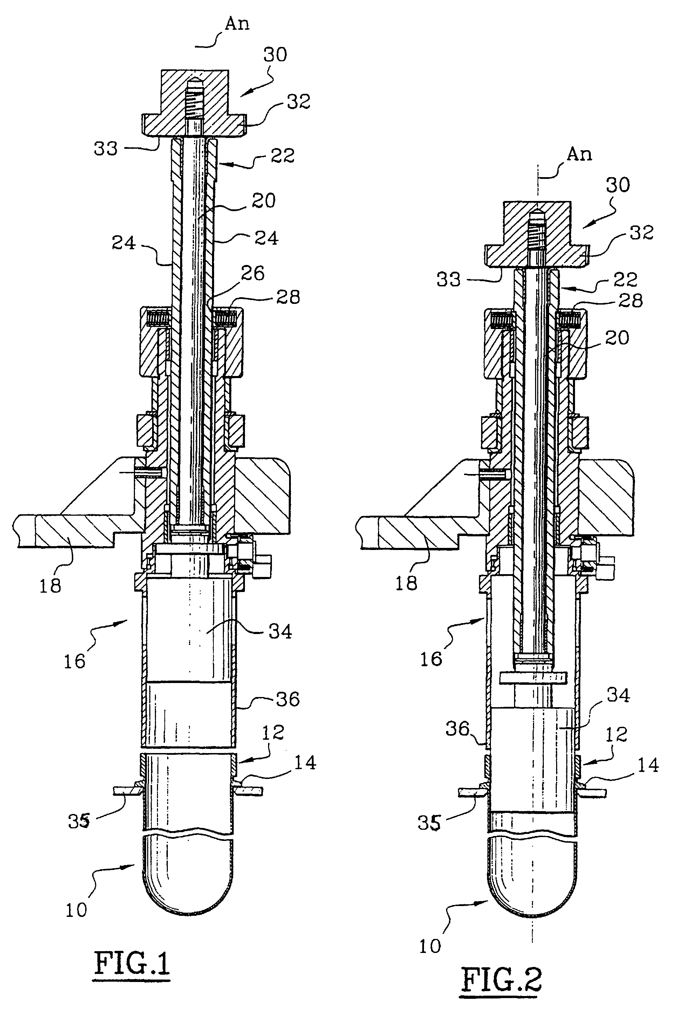

L'invention va maintenant être décrite dans le cas particulier d'un four de traitement thermique d'une préforme 10 en matériau thermoplastique, par exemple en PET. La préforme 10 est réalisée par moulage par injection et elle présente un col 12 qui est formé directement à sa forme finale, le col comportant notamment une collerette radiale externe 14. Pour des raisons de clarté de la description, on considérera dans toute la suite du texte que la préforme 10 est disposée verticalement, col en haut, ainsi que cela est illustré par exemple aux figures 1 et 2. Les termes géométriques utilisés pour décrire l'invention découlent de cette convention et ne doivent pas être considérés comme des limitations à la portée de l'invention.

Sur les figures 1 et 2, on a illustré de manière schématique et partielle le dispositif de préhension 16 d'un maillon de transport dont un corps principal 18 n'est illustré ici que de manière très partielle. Le corps principal 18 est destiné à être relié à deux autres maillons similaires en étant articulé par rapport à ceux-ci autour d'un axe vertical pour former une partie d'une chaîne de transport de préformes dans le four. Dans cet exemple, la chaîne se déplace donc pour l'essentiel dans un plan horizontal. Cependant, les maillons de transport et leurs modes de liaison pourront être réalisés de manière différente sans sortir du cadre de l'invention. Ils pourront même être indépendants les uns des autres, à condition toutefois de disposer de moyens d'entraînement synchronisés pour que deux maillons soit écartés du même pas, au moins au niveau de la zone de préhension de la préforme.

Le dispositif de préhension 16 comporte une tige cylindrique 20 d'axe vertical Aₙ qui est montée à rotation autour de son axe dans un fourreau 22 qui est lui-même monté à coulissement dans le corps principal 18 selon l'axe Aₙ. La tige 20 et le fourreau 22 sont solidaires axialement l'un de l'autre de sorte que le dispositif de préhension 16 peut coulisser entre deux positions extrêmes, à savoir une position haute dégagée illustrée à la figure 1 et une position basse de préhension illustrée à la figure 2.

Le fourreau 22, dont la forme générale est cylindrique, comporte deux méplats latéraux 24 qui s'étendent axialement sur la longueur de la course du dispositif de préhension et qui sont diamétralement opposés. Le maillon comporte des patins 26 qui sont sollicités en appui radialement par des ressorts 28 contre les méplats 24 pour maintenir par freinage la position axiale du fourreau 22, et donc celle du dispositif de préhension 16.

A son extrémité supérieure, la tige 20 comporte une tête de commande 30 dont la forme générale est cylindrique. A sa base, la tête 30 présente une roue dentée 32 dont le diamètre est supérieur à celui du fourreau 22 pour pouvoir coopérer avec une crémaillère fixe (non représentée) du four afin de provoquer la rotation de la tige 20 autour de son axe Aₙ lorsque le maillon de transport se déplace dans le four.

A son extrémité inférieure, la tige 20 porte un mandrin de préhension 34 qui présente une forme adaptée au col 12 de la préforme 10. Le mandrin 34 ici représenté présente une forme sensiblement cylindrique mais, dans la pratique, sa forme pourra être plus complexe. Bien entendu, dans le cas où l'on souhaiterait saisir la préforme par l'extérieur du col, le mandrin 34 serait remplacé par exemple par une cloche de préhension.

Pour effectuer la préhension de la préforme 10 à l'entrée du four, le mandrin 34 doit être engagé axialement vers le bas à l'intérieur du col 12 de la préforme 10, ce qui est effectué en déplaçant l'ensemble du dispositif de préhension 16 de sa position haute à sa position basse.

Le mandrin est reçu avec serrage dans le col, ce qui implique que l'engagement nécessite une certaine force selon la direction de l'axe Aₙ. Cette force est dépendante notamment du degré de serrage et elle peut par exemple atteindre environ 150 daN dans certaines applications. On notera que la reprise de l'effort axial de préhension par la préforme se fait par exemple par appui de sa collerette 14 sur une surface d'appui 35 dépendante du maillon de transport.

Une fois engagé dans le col 12, le mandrin 34 peut donc porter la préforme 10 et même l'entraîner en rotation autour de son axe Aₙ.

A la sortie du four, il faut au contraire dégager le mandrin 34 axialement vers le haut pour libérer la préforme 10. Comme le mandrin a alors tendance à emmener la préforme 10 avec lui vers le haut, il faut prévoir des moyens d'éjection qui la bloque vers le haut. A cet effet, le maillon de transport comporte un éjecteur tubulaire 36 d'axe Aₙ qui est solidaire du corps principal 18 du maillon et dont le diamètre interne est sensiblement égal au diamètre interne du col 12 de la préforme 10.

En position dégagée, le mandrin 34 est reçu à l'intérieur de l'éjecteur 36, tandis qu'en position basse, le mandrin 34 dépasse en dessous de l'extrémité inférieure de l'éjecteur 36. Ce dernier est agencé de telle sorte que son bord inférieur soit situé juste au-dessus du bord supérieur du col de la préforme 10.

Aussi, lorsque la préforme 10 est ramenée vers le haut par le mandrin 34, elle vient se bloquer en appui contre l'éjecteur 36. Le mandrin 34 poursuivant sa remontée, il finit donc par se dégager entièrement du col 12 de la préforme, et cette dernière se trouve ainsi libérée. Bien entendu l'éjecteur pourrait aussi prendre appui contre la collerette 14.

L'invention concerne plus particulièrement les moyens qui permettent de commander le dispositif de préhension 16 entre ses positions haute et basse.

Plus précisément, le four selon l'invention comporte des moyens qui permettent, en entrée de four, de commander le dispositif de préhension 16 de sa position haute vers sa position basse pour commander la préhension de la préforme, et, à la sortie du four, des moyens qui permettent de le ramener de sa position basse à sa position haute. Ces deux moyens sont très similaires et comportent d'ailleurs deux mécanismes identiques 38 sur lesquels on adapte un outil spécifique à la commande de montée ou à la commande de descente.

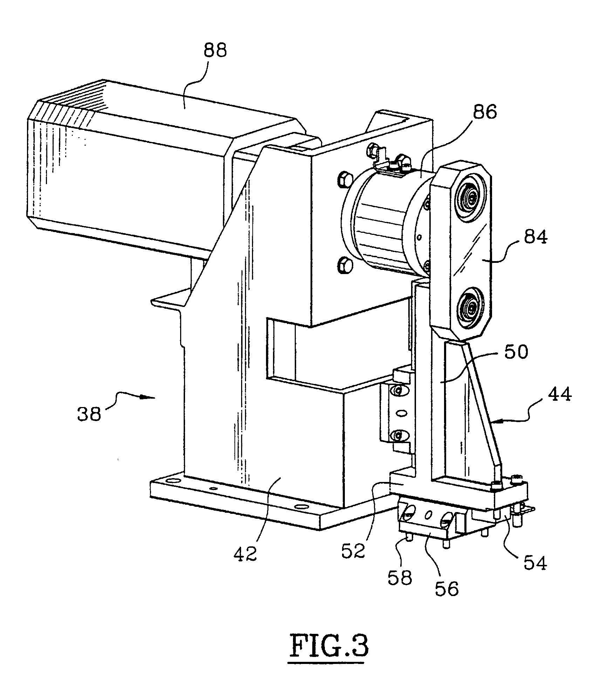

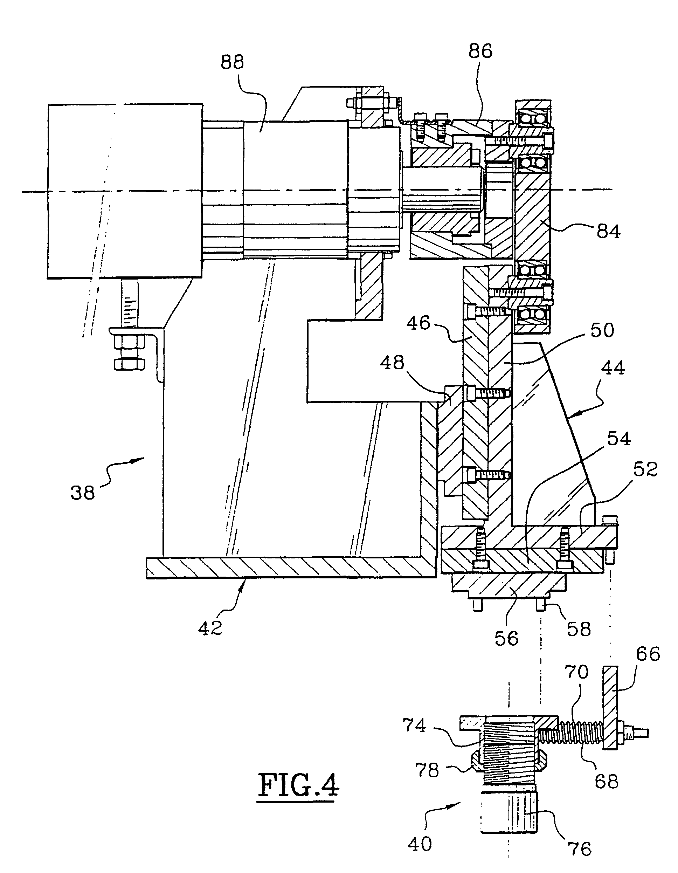

Le mécanisme commun 38 est illustré en perspective sur la figure 3 et en coupe sur la figure 4. Sur la figure 4, on a aussi illustré un outil poussoir 40 spécifique à la commande de descente pour assurer la préhension de la préforme 10.

Le mécanisme 38 comporte un châssis 42 qui est destiné à être fixé sur un bâti du four. Sur ce châssis 42, un bras en forme d'équerre 44 est monté de manière à pouvoir coulisser selon la direction de préhension, c'est-à-dire en l'occurrence selon la direction verticale. Pour ce faire, on utilise une liaison glissière formée d'une part d'un rail vertical 46 solidaire d'un montant vertical 50 de l'équerre 44, et d'autre part d'un chariot fixe 48 solidaire du châssis 42.

Le mécanisme comporte des moyens pour provoquer un mouvement alternatif de l'équerre 44 selon la direction axiale de préhension. Dans l'exemple proposé, on utilise un système à bielle 84 et à manivelle 86 entraîné par un moteur électrique rotatif 88 d'axe horizontal. Bien entendu tout autre moyen connu pour imposer un mouvement axial alternatif à l'équerre 44 peut être utilisé. Ainsi, les mouvements de l'équerre pourraient être commandés par un vérin.

A l'extrémité inférieure de son montant vertical 50, le bras en forme d'équerre 44 comporte une plaque inférieure 52 horizontale sur la face inférieure de laquelle est fixé un rail horizontal 54 faisant partie d'une seconde liaison glissière. Un chariot mobile 56 est monté sur le rail horizontal 54 de manière à pouvoir coulisser par rapport à l'équerre 44 selon une direction horizontale qui est donc perpendiculaire à la direction verticale de préhension de la préforme et qui correspond à la direction de déplacement de la chaîne de transport des préformes.

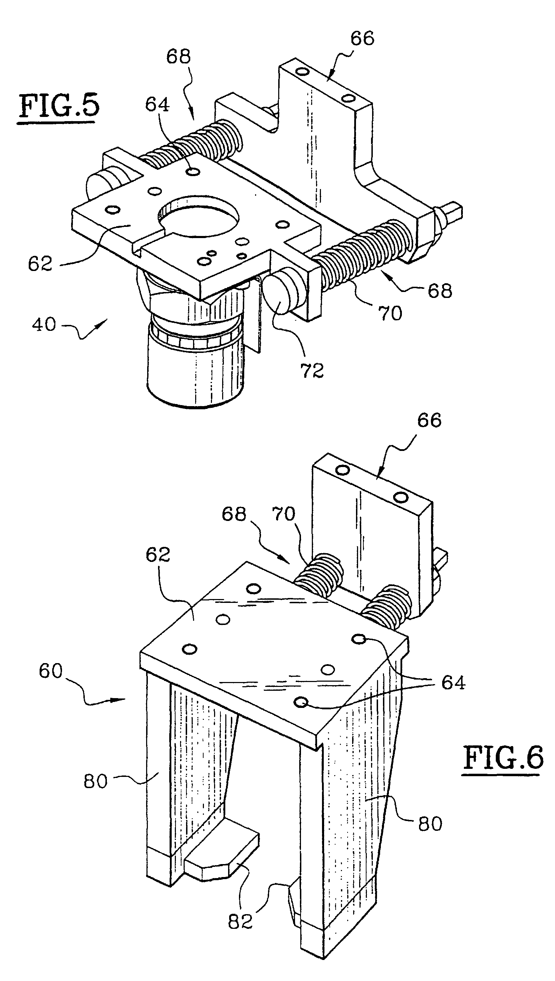

Le chariot mobile 56 est destiné à porter l'un ou l'autre des deux outils spécifiques 40, 60 illustrés plus en détail respectivement aux figures 5 et 6.

Chacun de ces deux outils 40, 60 comporte une platine supérieure 62 qui est pourvue d'orifices d'indexation 64 destinés à recevoir des pions d'indexation 58 qui s'étendent axialement vers le bas depuis le chariot mobile 56. La platine 62 est fixée sur le chariot 56 par exemple par deux vis (non représentées).

Chacun des deux outils 40, 60 comporte aussi une plaque d'appui 66 qui s'étend dans un plan vertical perpendiculaire à la direction de coulissement du chariot mobile 56 et qui est destinée à être fixée directement sur la plaque inférieure 52 de l'équerre 44. La plaque d'appui 66 de chaque outil porte deux guides parallèles 68 qui s'étendent selon la direction de coulissement du chariot mobile 56 et qui sont reçus chacun à coulissement au travers d'un orifice de guidage percé dans la platine 62. Les guides 68 servent à supporter des ressorts hélicoïdaux de compression 70 qui sont interposés entre la platine 62 et la plaque d'appui 66 pour les écarter l'une de l'autre. L'extrémité libre des guides 68 comporte un renflement contre lequel la platine 62 vient en butée sous l'action des ressorts 70.

Ainsi, lorsque l'un ou l'autre des deux outils 40, 60 est monté sur le chariot mobile 56, la platine 62 peut coulisser selon la direction horizontale par rapport à l'équerre 44. Toutefois, sous l'action des ressorts 70, elle est rappelée vers une position de repos dans laquelle elle est en butée contre les renflements 72 des guides 68.

Sur les figures 4 et 5, on a illustré l'outil poussoir 40 destiné à commander le déplacement d'un dispositif de préhension 16 vers le bas, simplement en appuyant sur la face supérieure la tête de commande 30 de ce dernier. L'outil poussoir 40 présente un fût tubulaire 74 qui s'étend axialement vers le bas depuis la platine 62 et qui est muni sur sa face interne d'un filetage à pas fin pour permettre la fixation et le positionnement axial précis d'un plot cylindrique 76 dont la face inférieure est destinée à venir prendre appui contre la tête de commande 30 pour en provoquer la descente. Un contre-écrou 78 permet de bloquer le plot 76 sur le fût 74 pour éviter tout déréglage de sa position axiale.

L'outil fourche 60 qui est illustré à la figure 6 présente deux jambages 80 en forme de plaques parallèles qui s'étendent verticalement vers le bas depuis la platine 62. Chaque jambage 80 comporte, à son extrémité inférieure, un rebord transversal interne 82 qui s'étend en direction de l'autre jambage. L'écartement transversal et la hauteur des jambages 80 sont supérieurs aux dimensions correspondantes de la tête de commande 30 de manière que cette dernière puisse circuler entre les deux jambages. Au contraire, l'écartement transversal des deux rebords est supérieur au diamètre du fourreau 22 mais inférieur à celui de la roue dentée 32 de façon que, lorsque la tête 30 est reçue entre les deux jambages 80 et que l'outil fourche 60 est déplacé vers le haut, les rebords 82 viennent coopérer avec une face inférieure 33 de la tête 30 pour emmener celle-ci vers le haut.

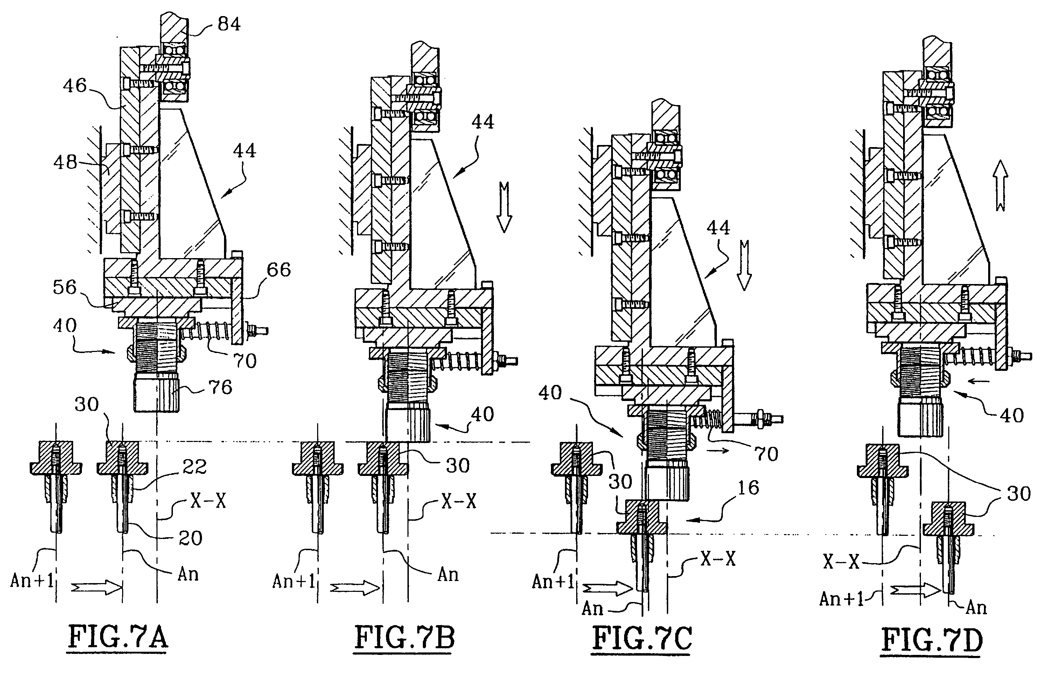

Les schémas des figures 7A à 7D permettent d'illustrer le fonctionnement des moyens de commande selon l'invention dans le cas de la préhension de la préforme. Sur ces schémas, on a représenté la tête de commande 30 de deux maillons successifs de la chaîne de transport. Les dispositifs de préhension de ces deux maillons ont respectivement comme axe les axes Aₙ et Aₙ₊₁.

A l'étape illustrée à la figure 7A, l'équerre 44 est dans une position initiale haute et l'on peut voir que la tête de commande 30 de l'un des maillons s'approche suivant le mouvement de la chaîne de transport, c'est-à-dire de gauche à droite en considérant les figures. La face inférieure du plot 76 de l'outil poussoir 40 est alors située plus haut que la tête de commande 30.

A partir de cet instant, le système à bielle et à manivelle provoque le début de la descente du bras en forme d'équerre 44. L'outil poussoir 40 est alors en position de repos par rapport à l'équerre, c'est-à-dire repoussé en appui vers la gauche par les ressorts 70.

A l'étape 7B, on voit que le maillon de la chaîne de transport s'est déplacé jusqu'à venir en partie à l'aplomb de l'outil poussoir 40. Cet instant correspond sensiblement au moment auquel la face inférieure du poussoir 40 arrive au contact de la tête de commande 30. En réalité, on voit que le poussoir 40 et la tête de commande 30, bien qu'étant sensiblement de même diamètre, ne coopèrent que par la moitié de leurs surfaces respectives car le contact se produit avant que leurs axes An et X-X ne coïncident. On remarque que le poussoir 40 est encore en position de repos par rapport à l'équerre 44.

A partir de cet instant, le mouvement de descente de l'équerre 44 continuant, le poussoir exerce sur la tête de commande une poussée vers le bas, ce qui permet au mandrin de préhension 34 de pénétrer à l'intérieur du col 12 de la préforme. Cependant, tout au long du mouvement de descente du poussoir 40 et de la tête de commande 30, cette dernière continue de se déplacer avec le maillon de la chaîne de transport selon la direction horizontale alors que l'équerre 44, elle, ne peut se déplacer selon cette direction. Aussi, comme on peut le voir à la figure 7C, le poussoir 40 est alors écarté horizontalement de sa position de repos par la tête 30 par coulissement du chariot mobile 56 par rapport à l'équerre 44, ceci en comprimant les ressorts 70.

Dans l'exemple proposé, cet entraînement du poussoir 40 se fait par simple adhérence de la face inférieure du poussoir 40 sur la tête 30, sans glissement de l'un par rapport à l'autre, cette adhérence étant le résultat de l'effort axial de préhension nécessaire pour permettre l'engagement du mandrin 34 dans le col de la préforme.

Lorsque l'équerre 44 a atteint sa position finale basse, le système à bielle et à manivelle commence alors le mouvement de remontée. Dès lors, le contact entre le poussoir 40 et la tête de commande 30 est rompu de sorte que cette dernière, freinée par les patins 26, a atteint sa position extrême basse de préhension de la préforme. On remarque donc que la position extrême basse du dispositif de préhension 16 est déterminée par la position finale basse du poussoir 40. Le fait d'avoir un poussoir en deux parties, dans lequel on peut régler la position du plot cylindrique 76 par rapport à la platine 62, permet donc de définir avec précision la position extrême basse du dispositif de préhension 16, donc de définir avec précision la distance sur laquelle le mandrin 34 est engagée dans le col de la préforme.

Par ailleurs, comme on peut le voir à la figure 7D, dès que le contact avec la tête de commande est rompu, les ressorts 70 repoussent l'outil poussoir 40 vers sa position de repos par rapport à l'équerre 44. De sorte que le mécanisme se trouve dans sa configuration initiale. On voit par ailleurs que la tête de commande 30 du maillon suivant se présente alors en position en vue d'être, à son tour, déplacée vers le bas par le poussoir 40.

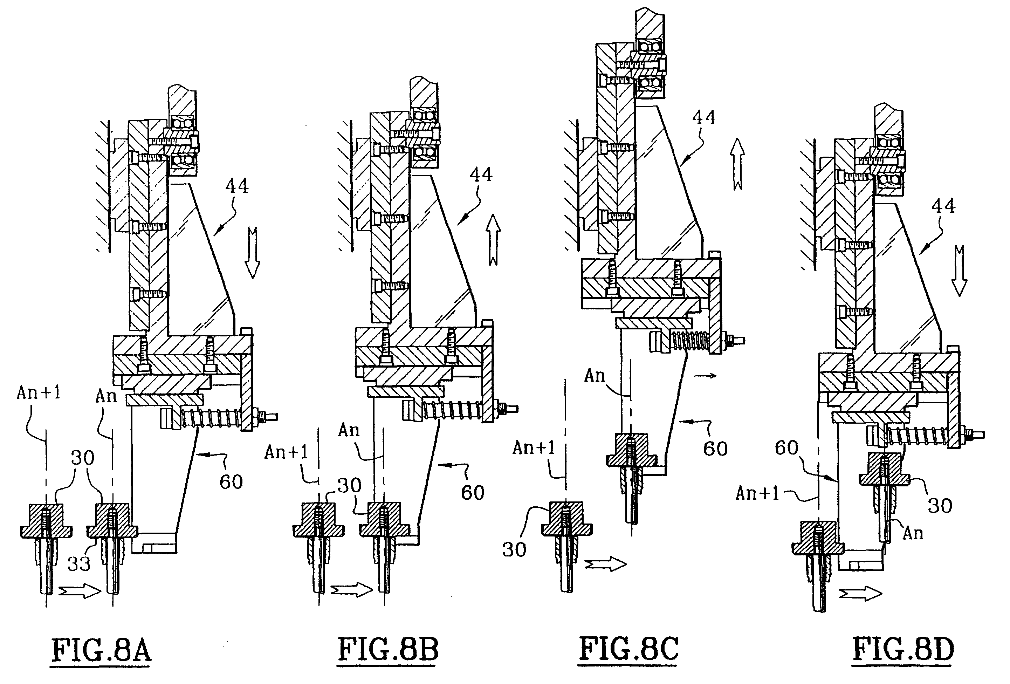

Les figures 8A à 8D illustrent de manière similaire le fonctionnement des moyens de commande au moment de la libération de la préforme.

A la figure 8A, le mécanisme est illustré en position initiale basse, avant que la tête de commande 30 du premier des deux maillons considérés n'arrive au niveau de l'outil fourche 60. On remarque que les rebords 82 des jambages sont alors situés en dessous de la face inférieure 33 de la tête 30 qui est dans sa position extrême basse. De la sorte, la tête 30 peut venir s'engager entre les jambages 80 du fait du mouvement de la chaîne de transport.

A la figure 8B, on a illustré la position de contact de l'équerre 44 pour laquelle les rebords 82 arrivent au contact de la tête 30 au cours de leur mouvement de montée. Là encore, le contact se produit avant que la tête 30 ne soit arrivée exactement à l'aplomb de l'outil fourche 60.

A la figure 8C, l'équerre 44 a atteint sa position finale haute, entraînant vers le haut la tête 30 jusqu'à sa position extrême haute. Dans le même temps, du fait de l'effort nécessaire à l'extraction du mandrin 34, la tête 30 entraîne l'outil fourche 60 selon la direction horizontale par rapport à l'équerre 44, en comprimant les ressorts 70.

Dès cet instant, le système à bielle et à manivelle provoque de nouveau la descente de l'équerre 44, et donc la rupture du contact entre les rebords 82 et la tête 30, laquelle reste dans sa position haute grâce aux patins 26. Au contraire, les ressorts 70 ramènent alors l'outil fourche 60 vers sa position de repos. Malgré cela, l'outil fourche peut regagner sa position initiale basse avant que la tête de commande suivante d'axe Aₙ₊₁ ne se présente en position de contact.

Dans l'exemple proposé, le moteur électrique 88 tourne à vitesse constante de sorte que les temps de montée et de descente des outils 40, 60 sont identiques. Cependant, on pourrait prévoir que le moteur soit commandé de telle sorte que l'un des deux mouvements de montée ou de descente se produise plus rapidement que l'autre, par exemple en vue d'éviter tout risque d'interférence de l'outil avec la tête suivante lors du mouvement de retour. Cette possibilité pourrait aussi être utilisée en vue d'obtenir une vitesse prédéterminée de déplacement du dispositif de préhension, indépendamment de la vitesse de déplacement de la chaîne de convoyage, laquelle est liée par exemple à la cadence de la machine de soufflage associée au four.

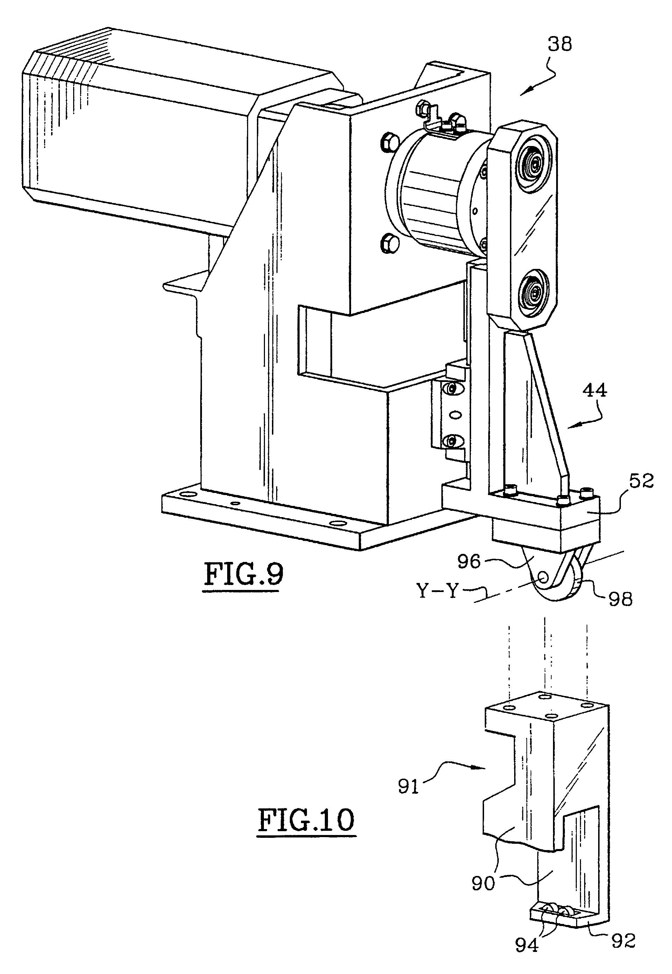

Les figures 9 et 10 illustrent deux mécanismes conformes aux enseignements de l'invention mais dans lesquels les organes d'interface par lesquels le mécanisme agit sur la tête 30 de la tige 20 ne sont pas montés à coulissement sur le bras 44, mais sont constitués d'au moins un galet monté à rotation sur le bras 44 autour d'un axe horizontal pour pouvoir rouler sur la tête 30 de la tige 20.

Sur la figure 9, on peut voir que sous la plaque inférieure 52 du bras 44, on a monté un outil pour commander le dispositif de préhension 16 de sa position haute à sa position basse. Cet outil est constitué d'un simple galet 98 monté à rotation sur une chape 96 autour d'un axe horizontal Y-Y qui est perpendiculaire à la fois à la direction axiale de préhension et à la direction du mouvement de la chaîne de convoyage. La chape 98 est fixée rigidement sous la plaque inférieure 52.

De la sorte, lorsque le bras 44 est commandé de sa position haute vers sa position basse, le galet 98 vient en appui contre la tête de commande 30. Une fois au contact, le galet 98 peut pousser la tige 20 vers le bas. Dans le même temps, étant donné le déplacement du maillon 18, le galet 98 roule sur la tête 30, sans induire aucune force parasite sur le maillon.

Sur la figure 10, on a représenté un outil 89 destiné à être fixé directement sous la plaque inférieure 52 du bras 44 pour assurer la remontée du dispositif de préhension vers sa position haute. Cet outil 89 présente une forme similaire à celle de l'outil fourche 60 décrit plus haut, et il comporte donc deux jambages parallèles 90, chacun d'eux étant muni à son extrémité inférieure d'un rebord transversal interne 92.

Toutefois, dans ce mode de réalisation de l'invention, l'outil 89 est fixe par rapport au bras 44 mais les rebords 92 des jambages 90 sont pourvus chacun de deux galets 94 qui sont montés à rotation autour de leurs axes, lesquels sont perpendiculaires à la fois à la direction axiale de préhension et à la direction du mouvement de la chaîne de convoyage. Ces galets 94, qui affleurent au-dessus de la face supérieure des rebords 92, sont destinés à venir au contact de la face inférieure 33 de la tête 30.

Ainsi, lorsque le bras 44 provoque la remontée d'un dispositif de préhension, les galets 94 permettent à la tête 30 de se déplacer par rapport au bras 44 selon la direction du mouvement de la chaîne de convoyage sans que ce déplacement relatif n'introduise aucun effort s'opposant au mouvement de la chaîne grâce au fait que le contact entre les galets 94 et la tête 30 se fait avec roulement et pas avec glissement.

On le voit, le mécanisme selon l'invention permet de commander le dispositif de préhension de chaque mécanisme de manière rapide, avec une force importante et sans introduire d'effort parasite sur la chaîne de transport.

## Revendications

1. Four de conditionnement thermique pour une installation de fabrication par soufflage de récipients en matériau thermoplastique, du type comportant une chaîne de maillons de transport comportant des dispositifs de préhension (16) dont chacun est destiné à porter une ébauche (10) du récipient en vue de la faire circuler le long d'un parcours à l'intérieur du four, du type dans lequel la chaîne est animée d'un mouvement continu le long de son parcours, du type dans lequel chaque dispositif de préhension (16) est mobile axialement par rapport au maillon (18) qui le porte pour, lorsqu'il est amené d'une position extrême dégagée à une position extrême de préhension, s'engager axialement sur le col (12) de l'ébauche (10), et du type dans lequel il est prévu des moyens de commande des déplacements des dispositifs de préhension entre leurs positions dégagée et de préhension,
**caractérisé en ce que** les moyens de commande des déplacements des dispositifs de préhension comportent au moins un mécanisme pourvu d'un bras (44) qui est mobile selon une trajectoire sensiblement parallèle à la direction axiale (Aₙ) de préhension et qui porte un organe d'interface (40, 60, 94, 98) destiné à venir au contact du dispositif de préhension (16), et **en ce que** l'organe d'interface (40, 60, 94, 98) est monté mobile sur le bras (44) de manière à permettre un contact sans glissement avec le dispositif de préhension (16) tout en étant immobilisé par rapport au bras (44) selon la direction axiale de préhension.

2. Four selon la revendication 1, **caractérisé en ce que** le bras (44) est commandé sur sa trajectoire selon un mouvement alternatif entre une position initiale et une position finale, et **en ce que**, pour une position de contact du bras comprise entre ses positions initiale et finale, l'organe d'interface (40, 60, 94, 98) entre en contact avec le dispositif de préhension (30, 16) qui est dans l'une de ses positions extrêmes et le force vers l'autre de ses positions extrêmes, laquelle correspond à la position finale du bras (44).

3. Four selon la revendication 1 ou 2, **caractérisé en ce que** l'organe d'interface (40, 60) est monté sur le bras (44) de manière mobile selon une direction parallèle au mouvement des maillons de la chaîne.

4. Four selon la revendication 3, **caractérisé en ce que** l'organe d'interface (40, 60) est rappelé élastiquement vers une position de repos par rapport au bras (44), et **en ce que**, du fait du déplacement du chaînon (18) correspondant entre le moment d'arrivée du bras en contact avec l'organe d'interface et le moment d'arrivée du bras à sa position finale, l'organe d'interface (40, 60) est écarté de sa position de repos par le dispositif de préhension (30, 16) au contact duquel il se trouve.

5. Four selon la revendication 4, **caractérisé en ce que**, entre la position de contact et la position finale du bras (44), le dispositif de préhension (30, 16) coopère par adhérence avec l'organe d'interface (40, 60) pour l'écarter de sa position de repos par rapport au bras (44).

6. Four selon l'une des revendications 4 ou 5, **caractérisé en ce que**, au cours du mouvement de retour du bras (44) de sa position finale vers sa position initiale, l'organe d'interface (40, 60) est ramené vers sa position de repos par des moyens de rappel élastiques (70).

7. Four selon l'une quelconque des revendications 3 à 6, **caractérisé en ce que** l'organe d'interface (40, 60) est monté à coulissement sur le bras selon la direction du mouvement des maillons de la chaîne.

8. Four selon l'une des revendications 1 ou 2, **caractérisé en ce que** l'organe d'interface est composé d'au moins un galet (94, 98) qui est monté à rotation sur le bras autour d'un axe (Y-Y) perpendiculaire à la direction axiale de préhension et à la direction du mouvement des maillons (18) de la chaîne.

9. Four selon la revendication 8, **caractérisé en ce que** entre le moment d'arrivée de l'organe d'interface (94, 98) en contact avec le dispositif de préhension et le moment d'arrivée du bras (44) à sa position finale, le dispositif de préhension (30, 16) coopère par adhérence avec l'organe d'interface (40, 60) pour entraîner le galet en rotation autour de son axe.

10. Four selon l'une quelconque des revendications précédentes, **caractérisé en ce que** le dispositif de préhension (16) comporte une tige (20) dont un tronçon central est guidé axialement dans le maillon (18) correspondant et dont les deux extrémités opposées (34, 30) coopèrent respectivement avec l'ébauche (10) et avec le mécanisme, **en ce que** le mécanisme exerce un effort de poussée sur la tige (20), et **en ce que** l'organe d'interface (40, 98) coopère en appui contre une surface (30) de la tige (20) qui est sensiblement plane et perpendiculaire à la direction axiale.

11. Four selon l'une quelconque des revendications 3 à 7, **caractérisé en ce que** le dispositif de préhension comporte une tige (20) dont un tronçon central est guidé axialement dans le maillon (18) correspondant et dont les deux extrémités opposées (34, 30) coopèrent respectivement avec l'ébauche (10) et avec le mécanisme, **en ce que** le mécanisme exerce un effort de traction sur la tige (20), **en ce que** l'organe d'interface (60) présente la forme d'un profilé en U présentant deux branches parallèles (80) dont les extrémités (82) sont rabattues vers l'intérieur pour délimiter une fente permettant le passage de la tige (20), **en ce que** la tige (20) des dispositifs de préhension porte une tête de commande (30) qui est destinée à circuler entre les deux branches (80) du profilé et qui présente une largeur supérieure à la largeur de la fente de telle sorte que, lorsque l'organe d'interface (60) est déplacé axialement par le bras (44), les extrémités rabattues (82) du profilé coopèrent avec la tête (30) pour commander le déplacement axial du dispositif de préhension (16).

12. Four selon l'une des revendications 8 ou 9, **caractérisé en ce que** le dispositif de préhension comporte une tige (20) dont un tronçon central est guidé axialement dans le maillon (18) correspondant et dont les deux extrémités opposées (34, 30) coopèrent respectivement avec l'ébauche (10) et avec le mécanisme, **en ce que** le mécanisme exerce un effort de traction sur la tige (20), **en ce que** le bras (44) présente la forme d'un profilé en U présentant deux branches parallèles (90) dont les extrémités (92) sont rabattues vers l'intérieur pour délimiter une fente permettant le passage de la tige (20), **en ce que** chacune des deux extrémités rabattues (92) porte au moins galet (94), **en ce que** la tige (20) des dispositifs de préhension porte une tête de commande (30) qui est destinée à circuler entre les deux branches (90) du profilé et qui présente une largeur supérieure à la largeur de la fente de telle sorte que, lorsque le bras (44) est déplacé axialement, les galets (94) des extrémités rabattues (92) du profilé coopèrent avec la tête (30) pour commander le déplacement axial du dispositif de préhension (16).

13. Four selon l'une quelconque des revendications précédentes, **caractérisé en ce que** le mouvement alternatif du bras (44) est commandé par un système à bielle (84) et à manivelle (86).

14. Four selon l'une quelconque des revendications précédentes, **caractérisé en ce que** les moyens de commande des déplacements des moyens de préhension comportent deux mécanismes dont l'un commande le déplacement des dispositifs de préhension (16) de leur position extrême dégagée vers leur position extrême de préhension, et dont l'autre commande le déplacement inverse.

## Patentansprüche

1. Ofen zur Wärmekonditionierung für eine Herstellungsanlage für Behälter aus thermoplastischem Material durch Blasformen von der Art, die eine Transportgliederkette mit Greifvorrichtungen (16) umfasst, von denen jede dazu vorgesehen ist, einen Rohling (10) des Behälters zu tragen, um ihn sich längs einer Bahn im Inneren des Ofens bewegen zu lassen, von der Art, bei der die Kette in einer kontinuierlichen Bewegung längs ihrer Bahn angetrieben wird, von der Art, bei der jede Greifvorrichtung (16) relativ zu dem Glied (18), das sie trägt, axial beweglich ist, wenn sie von einer äußersten entkuppelten Position in eine äußerste Greifposition gebracht wird, axial am Hals (12) des Rohlings (10) in Eingriff zu kommen, und von der Art, bei der Mittel zur Betätigung der Verschiebungen der Greifvorrichtungen zwischen ihren entkuppelten und Greifpositionen vorgesehen sind,
**dadurch gekennzeichnet, dass** die Betätigungsmittel für die Verschiebungen der Greifvorrichtungen zumindest einen Mechanismus aufweisen, der mit einem Arm (44) versehen ist, der längs einer Bahn beweglich ist, die im Wesentlichen parallel zur axialen Greifrichtung (Aₙ) ist, und der ein Zwischenglied (40, 60, 94, 98) trägt, das dazu bestimmt ist, in Kontakt mit der Greifvorrichtung (16) zu kommen, und dass das Zwischenglied (40, 60, 94, 98) beweglich an dem Arm (44) angebracht ist, so dass es einen rutschfreien Kontakt mit der Greifvorrichtung (16) ermöglicht, während es relativ zu dem Arm (44) längs der axialen Greifrichtung unbeweglich bleibt.

2. Ofen nach Anspruch 1, **dadurch gekennzeichnet, dass** der Arm (44) auf seiner Bahn in Form einer zwischen einer Anfangsposition und einer Endposition hin- und hergehenden Bewegung betätigt wird, und dass in einer zwischen seiner Anfangs- und Endposition liegenden Kontaktposition des Arms das Zwischenglied (40, 60, 94, 98) in Kontakt mit der Greifvorrichtung (30, 16) kommt, die in einer ihrer äußersten Positionen ist, und sie in die andere ihrer äußersten Positionen drängt, die der Endposition des Arms (44) entspricht.

3. Ofen nach Anspruch 1 oder 2, **dadurch gekennzeichnet, dass** das Zwischenglied (40, 60) an dem Arm (44) in Richtung parallel zu der Bewegung der Glieder der Kette bewegliche Weise angebracht ist.

4. Ofen nach Anspruch 3, **dadurch gekennzeichnet, dass** das Zwischenglied (40, 60) elastisch in eine Ruheposition relativ zum Arm (44) zurückgeführt wird, und dass wegen der Verschiebung des entsprechenden Kettenglieds (18) zwischen dem Moment, in dem der Arm in Kontakt mit dem Zwischenglied kommt, und dem Moment, in dem der Arm seine Endposition erreicht, das Zwischenglied (40, 60) durch die Greifvorrichtung (30, 16), mit dem es Kontakt hat, aus seiner Ruheposition entfernt wird.

5. Ofen nach Anspruch 4, **dadurch gekennzeichnet, dass** zwischen der Kontaktposition und der Endposition des Arms (44) die Greifvorrichtung (30, 16) durch Haftung mit dem Zwischenglied (40, 60) zusammenwirkt, um es aus seiner Ruheposition relativ zum Arm (44) entfernen.

6. Ofen nach einem der Ansprüche 4 oder 5, **dadurch gekennzeichnet, dass** während der Rückkehrbewegung des Arms (44) aus seiner Endposition in seine Anfangsposition das Zwischenglied (40, 60) durch elastische Rückstellmittel (70) in seine Ruheposition zurückgeführt wird.

7. Ofen nach einem der Ansprüche 3 bis 6, **dadurch gekennzeichnet, dass** das Zwischenglied (40, 60) auf dem Arm in Richtung der Bewegung der Glieder der Kette gleitend angebracht ist.

8. Ofen nach einem der Ansprüche 1 oder 2, **dadurch gekennzeichnet, dass** das Zwischenglied aus zumindest einer Rolle (94, 98) besteht, die auf dem Arm um eine zur axialen Greifrichtung und zur Bewegungsrichtung der Glieder (18) der Kette senkrechten Achse (Y-Y) drehbar angebracht ist.

9. Ofen nach Anspruch 8, **dadurch gekennzeichnet, dass** zwischen dem Moment, in dem das Zwischenglied (94, 98) Kontakt mit der Greifvorrichtung bekommt, und dem Moment, in dem der Arm (44) seine Endposition erreicht, die Greifvorrichtung (30, 16) durch Haftung mit dem Zwischenglied (40, 60) zusammenwirkt, um die Rolle um ihre Achse in Drehung zu versetzen.

10. Ofen nach einem der vorhergehenden Ansprüche, **dadurch gekennzeichnet, dass** die Greifvorrichtung (16) einen Schaft (20) umfasst, dessen Mittelteil axial in dem zugehörigen Glied (18) geführt wird und dessen zwei gegenüberliegende Enden (34, 30) mit dem Rohling (10) beziehungsweise mit dem Mechanismus zusammenwirken, dass der Mechanismus eine Schubkraft auf den Schaft (20) ausübt und dass das Zwischenglied (40, 98) an einer Fläche (30) des Schafts (20) zur Anlage kommt, die im Wesentlichen eben und zur axialen Richtung senkrecht ist.

11. Ofen nach einem der Ansprüche 3 bis 7, **dadurch gekennzeichnet, dass** die Greifvorrichtung (16) einen Schaft (20) umfasst, dessen Mittelteil axial in dem zugehörigen Glied (18) geführt wird und dessen zwei gegenüberliegende Enden (34, 30) mit dem Rohling (10) beziehungsweise mit dem Mechanismus zusammenwirken, dass der Mechanismus eine Zugkraft auf den Schaft (20) ausübt, dass das Zwischenglied (60) die Form eines U-Profils aufweist, das zwei parallele Schenkel (80) aufweist, deren Enden (82) zum Inneren hin umgeschlagen sind, um einen Schlitz zu begrenzen, der den Durchtritt des Schafts (20) gestattet, dass der Schaft (20) der Greifvorrichtungen einen Betätigungskopf (30) trägt, der dazu bestimmt ist, sich zwischen den zwei Schenkeln (80) des Profils zu bewegen, und der eine Breite aufweist, die größer als die Breite des Schlitzes ist, so dass, wenn das Zwischenglied (60) axial durch den Arm (44) verschoben wird, die umgeschlagenen Enden (82) des Profils mit dem Kopf (30) zusammenwirken, um die axiale Verschiebung der Greifvorrichtung (16) zu betätigen.

12. Ofen nach einem der Ansprüche 8 oder 9, **dadurch gekennzeichnet, dass** die Greifvorrichtung einen Schaft (20) umfasst, dessen Mittelteil axial in dem zugehörigen Glied (18) geführt wird und dessen zwei gegenüberliegende Enden (34, 30) mit dem Rohling (10) beziehungsweise mit dem Mechanismus zusammenwirken, dass der Mechanismus eine Zugkraft auf den Schaft (20) ausübt, dass der Arm (44) die Form eines U-Profils aufweist, das zwei parallele Schenkel (90) aufweist, deren Enden (92) zum Inneren hin umgeschlagen sind, um einen Schlitz zu begrenzen, der den Durchtritt des Schafts (20) gestattet, dass jedes der zwei umgeschlagenene Enden (92) zumindest eine Rolle (94) trägt, dass der Schaft (20) der Greifvorrichtungen einen Betätigungskopf (30) trägt, der dazu bestimmt ist, sich zwischen den zwei Schenkeln (90) des Profils zu bewegen, und der eine Breite aufweist, die größer als die Breite des Schlitzes ist, so dass, wenn der Arm (44) axial verschoben wird, die Rollen (94) der umgeschlagenen Enden (92) des Profils mit dem Kopf (30) zusammenwirken, um die axiale Verschiebung der Greifvorrichtung (16) zu betätigen.

13. Ofen nach einem der vorhergehenden Ansprüche, **dadurch gekennzeichnet, dass** die Hin- und Herbewegung des Arms (44) durch ein System mit Pleuelstange (84) und Kurbel (86) betätigt wird.

14. Ofen nach einem der vorhergehenden Ansprüche, **dadurch gekennzeichnet, dass** die Betätigungsmittel für die Verschiebung der Greifmittel zwei Mechanismen umfassen, deren eines die Verschiebung der Greifmittel (16) aus ihrer äußersten entkuppelten Position in ihre äußerste Greifposition betätigt und deren anderes die umgekehrte Verschiebung betätigt.

## Claims

1. Thermal conditioning oven for a facility for the blow-forming of thermoplastic receptacles, of the type comprising a link chain conveyor comprising gripping devices (16) each of which is intended to carry a rough form (10) of the receptacle so as to transport it along a path inside the oven, of the type in which the chain is driven with a continuous movement along its path, of the type in which each gripping device (16) can move axially with respect to the link (18) which bears it so as, when brought from an extreme disengaged position into an extreme gripping position, to engage axially over the neck (12) of the rough form (10), and of the type in which there are means for controlling the movements of the gripping devices between their disengaged and gripping positions,
**characterized in that** the means for controlling the movements of the gripping devices comprise at least one mechanism provided with an arm (44) which is able to move in a path roughly parallel to the axial direction (Aₙ) of gripping and which bears an interface member (40, 60, 94, 98) intended to come into contact with the gripping device (16), and **in that** the interface member (40, 60, 94, 98) is mounted so that it can move on the arm (44) in such a way as to allow sliding-free contact with the gripping device (16) while at the same time being immobilized with respect to the arm (44) in the axial direction of gripping.

2. Oven according to Claim 1, **characterized in that** the arm (44) is controlled in its path with a reciprocating movement between an initial position and a final position, and **in that**, for a position of contact of the arm lying between its initial and final positions, the interface member (40, 60, 94, 98) comes into contact with the gripping device (30, 16) which is in one of its extreme positions and forces it into the other of its extreme positions which corresponds to the final position of the arm (44).

3. Oven according to Claim 1 or 2, **characterized in that** the interface member (40, 60) is mounted on the arm (44) in such a way that it can move in a direction parallel to the movement of the links of the chain.

4. Oven according to Claim 3, **characterized in that** the interface member (40, 60) is returned elastically to a position of rest with respect to the arm (44), and **in that**, because of the movement of the corresponding chain link (18) between the moment of arrival of the arm in contact with the interface member and the moment of arrival of the arm in its final position, the interface member (40, 60) is moved away from its position of rest by the gripping device (30, 16) with which it is in contact.

5. Oven according to Claim 4, **characterized in that**, between the position of contact and the final position of the arm (44), the gripping device (30, 16) collaborates by adhesion with the interface member (40, 60) to move it away from its position of rest with respect to the arm (44).

6. Oven according to one of Claims 4 and 5, **characterized in that**, during the return movement of the arm (44) from its final position to its initial position, the interface member (40, 60) is returned to its position of rest by elastic return means (70).

7. Oven according to any one of Claims 3 to 6, **characterized in that** the interface member (40, 60) is slideably mounted on the arm in the direction of movement of the links of the chain.

8. Oven according to one of Claims 1 and 2, **characterized in that** the interface member is made up of at least one roller (94, 98) which is mounted to rotate on the arm about an axis (Y-Y) perpendicular to the axial direction of gripping and to the direction in which the links (18) of the chain move.

9. Oven according to Claim 8, **characterized in that**, between the moment of arrival of the interface member (94, 98) in contact with the gripping device and the moment of arrival of the arm (44) in its final position, the gripping device (30, 16) collaborates by adhesion with the interface member (40, 60) to drive the rotation of the roller about its axis.

10. Oven according to any one of the preceding claims, **characterized in that** the gripping device (16) comprises a rod (20) a central portion of which is guided axially in the corresponding link (18) and the two opposed ends (34, 30) of which collaborate one with the rough form (10) and one with the mechanism, **in that** the mechanism exerts a thrusting force on the rod (20), and **in that** the interface member (40, 98) collaborates in bearing against a surface (30) of the rod (20) which is roughly flat and perpendicular to the axial direction.

11. Oven according to any one of Claims 3 to 7, **characterized in that** the gripping device comprises a rod (20) a central portion of which is guided axially in the corresponding link (18) and the two opposed ends (34, 30) of which collaborate one with the rough form (10) and the other with the mechanism, **in that** the mechanism exerts a pulling force on the rod (20), **in that** the interface member (60) has the shape of a U-section having two parallel branches (80) the ends (82) of which are folded over inwards to delimit a slot allowing the passage of the rod (20), **in that** the rod (20) of the gripping devices bears a control head (30) which is intended to run between the two branches (80) of the section and which has a width greater than the width of the slot so that when the interface member (60) is moved axially by the arm (44), the folded-over ends (82) of the section collaborate with the head (30) to cause the axial movement of the gripping device (16).

12. Oven according to one of Claims 8 and 9, **characterized in that** the gripping device comprises a rod (20) a central portion of which is guided axially in the corresponding link (18) and the two opposed ends (34, 30) of which collaborate one with the rough form (10) and the other with the mechanism, **in that** the mechanism exerts a pulling force on the rod (20), **in that** the arm (44) has the shape of a U-section having two parallel branches (90) the ends (92) of which are folded over inwards to delimit a slot allowing the passage of the rod (20), **in that** each of the two folded-over ends (92) bears at least one roller (94), **in that** the rod (20) of the gripping devices bears a control head (30) which is intended to run between the two branches (90) of the section and which has a width greater than the width of the slot so that when the arm (44) is moved axially, the rollers (94) of the folded-over ends (92) of the section collaborate with the head (30) to cause the axial movement of the gripping device (16).

13. Oven according to any one of the preceding claims, **characterized in that** the reciprocating movement of the arm (44) is controlled by a link rod (84) and crank (86) system.

14. Oven according to any one of the preceding claims, **characterized in that** the means controlling the movements of the gripping means comprise two mechanisms, one of which controls the movement of the gripping devices (16) from their disengaged extreme position to their gripping extreme position, and the other of which controls the opposite movement.
